# EUROPÄISCHE PATENTANMELDUNG

(11) **EP 1 154 156 A2**
(43) Veröffentlichungstag der Anmeldung: **14.11.2001**
(21) Anmeldenummer: 01111381.8
(22) Anmeldetag: 10.05.2001
(51) Int. Cl.: F03D 11/04

(54) **Orkanschutz von Windkraftanlagen**

(30) Priorität: 12.05.2000 DE 10023324
(71) Anmelder: Schmitt, Horst, 60439 Frankfurt (DE)
(72) Erfinder: Schmitt, Horst, 60439 Frankfurt (DE)

(57) **Zusammenfassung**

Ausgehend von einer Windkraftanlage (1) mit zumindest einem Windschaufelrad, wobei zumindest ein Generator zur Erzeugung elektrischer Energie von dem Windschaufelrad antreibbar ist, wird die Aufgabe, Beschädigungen an der Windkraftanlage (1) zu vermeiden, dadurch gelöst, daß die Windkraftanlage (1) im Meeresbereich aufgestellt ist und Mittel zur zumindest teilweisen Verbringung der Windkraftanlage (1) unter die Meeresoberfläche (2) aufweist.

## Beschreibung

Die Erfindung betrifft Windkraftanlagen gemäß dem Oberbegriff der unabhängigen Patentansprüche 1 und 9.

Solche Windkraftanlagen, insbesondere Windkraftanlagen nach dem Querstromprinzip, sind aus der DE 196 35 379 A1 bekannt. Sie bieten den Vorteil eines geringen Raumbedarfs bei gleichzeitig hohem Wirkungsgrad. Es wurde zwar schon vorgeschlagen, bei zu starken Windverhältnissen Teilelemente der Windkraftanlage vom Generator abzutrennen und leer mitlaufen zu lassen. Gleichzeitig wurde schon vorgeschlagen, die Windkraftanlagen auf Schiffen, auf Ölplattformen oder auf im Meer verankerten Pontons aufzustellen. Denn gerade im Küstenbereich oder auf hoher See herrschen dauerhafte und ausreichende Windverhältnisse für den wirtschaftlichen Betrieb einer solchen Windkraftanlage. Dies funktioniert bis zu einer gewissen Windstärke auch zufriedenstellend. Ist allerdings eine bestimmte Windstärke überschritten, können Teilelemente der Windkraftanlage abgeschaltet werden. Bei zu hohen Windstärken (gerade im Orkanbereich) ist es trotzdem nicht zu vermeiden, daß die Windkraftanlage Schaden nimmt. Im Meeresbereich entsteht dieser Schaden aber auch schon bei geringerer Windstärke mit einhergehendem Wellenschlag. Dies kann im schlimmsten Fall zur Funktionsuntüchtigkeit und zum kompletten Ausfall einer Windkraftanlage führen, so daß die Stromproduktion eingestellt werden muß und hohe Reparaturkosten anfallen. Je nach Beschädigung ist die gesamte Windkraftanlage unbrauchbar geworden und muß verschrottet werden. Auch dies verursacht erhebliche Kosten.

Der Erfindung liegt daher die Aufgabe zugrunde, die geschilderten Nachteile zu vermeiden und den sicheren Betrieb von Windkraftanlagen zu gewährleisten.

Diese Aufgabe ist durch die Merkmale des Patentanspruches 1 bzw. des Patentanspruches 9 gelöst.

Erfindungsgemäß ist vorgesehen, daß die Windkraftanlage insbesondere im Meeresbereich aufgestellt ist und Mittel zur zumindest teilweisen Verbringung der Windkraftanlage aus dem Windbereich unter eine Wasseroberfläche, insbesondere die Meeresoberfläche, aufweist. Damit kann die Windkraftanlage gerade die im Küstenbereich, in Flußmündungsgebieten oder auf hoher See herrschenden Windverhältnisse sehr gut ausnutzen und optimal sowie wirtschaftlich betrieben werden. Der erzeugte Strom wird in bevorzugter Weise über Kabel an Land übertragen. Auf die Bauart der Windkraftanlage kommt es dabei nicht an. Sie sollte jedoch den erwarteten Windverhältnissen Rechnung tragen. Es ist selbstverständlich, daß alle verwendeten Materialien wasserfest, insbesondere seewasserfest, sind und elektrische und sonstige Anlagen (wie zum Beispiel die Generatoren) oder deren Teile wasserdicht verkapselt sind, so wie sie sich beispielsweise schon auf Ölbohrplattformen bewährt haben. Bei Querstrom-Windkraftanlagen, wie sie beispielsweise in der DE 196 35 379 bekannt sind, ist nur die Kapselung des Generators und die Abdichtung der Antriebswelle erforderlich. Sind diese Windverhältnisse jedoch für den Betrieb der Windkraftanlage ungünstig, das heißt, sind insbesondere die Windstärken zu groß, kann die Windkraftanlage unter die Meeresoberfläche abgesenkt werden, um Beschädigungen zu vermeiden. Dies gilt auch für den Fall, daß die Wellenhöhe zu groß ist, so daß durch die Absenkung auch eine Beschädigung der Windkraftanlage durch Wellenschlag vermieden wird. Zur Erfassung der Windverhältnisse und des Wellengangs sind entsprechende Mittel (Sensoren) vorhanden. Wenn diese ein Ausgangssignal liefern, das einem kritischen oder gefährlichen Umweltparameter entspricht, werden Mittel zur Absenkung der Windkraftanlage aktiviert. Gehen die Windverhältnisse und/oder der Wellenschlag in ihrer kritischen Größe zurück, wird dies wiederum erfaßt und dann in entsprechend umgekehrter Weise diese Mittel zum Auftauchen aktiviert.

Es ist besonders vorteilhaft, wenn die gesamte Windkraftanlage unter die Meeresoberfläche abgesenkt wird. Damit kann vollständig ein Einwirken von Wind und Wellen auf die Windkraftanlage vermieden werden. Gleichzeitig kann daran gedacht werden, im abgetauchten Zustand die Anlage weiter zu betreiben, so daß Wasserströmungen zur Energieerzeugung ausgenutzt werden. Dies gilt im übrigen auch für eine nur teilweise abgesenkte Anlage, die gleichzeitig vom Wind und von der Wasserströmung angetrieben werden kann. In diesem Fall müßten dann die Elemente, die vom Wind angetrieben werden, von den Elementen, die von der Meeresströmung angetrieben werden, abgekoppelt werden und einen eigenen Generator antreiben oder über eine Rutschkupplung, ein Getriebe oder dergleichen mit dem Generator verbunden werden, um unterschiedliche Drehzahlen auszugleichen.

Sollte bei der Absenkung unter die Meeresoberfläche aufgrund nicht ausreichenden Tiefgangs bzw. zu großer Bauhöhe der Windkraftanlage nicht genügend Platz sein, um die Windkraftanlage zumindest teilweise, insbesondere aber vollständig unter die Meeresoberfläche abzusenken, kann auch auf dem Meeresgrund eine Vertiefung vorgenommen werden, mit der dann ausreichend Platz zur Absenkung der Windkraftanlage geschaffen wird.

Die Absenkung der Windkraftanlage kann in der Weise erfolgen, daß diese linear unter die Meeresoberfläche abgesenkt wird. Die dabei aufzubringenden Kräfte können beispielsweise mittels einer Hydraulikanlage erzeugt werden, so daß Hydraulikzylinder das Absenken und Auftauchen der Windkraftanlage bewirken. Dies bietet sich bei Querstrom-Windkraftanlagen an. Bei Rotor-Windkraftanlagen kann die lineare Verschiebung auch vorgenommen werden. Hier bietet es sich jedoch an, die Rotor-Windkraftanlage um einen Schwenkpunkt, der bevorzugt unter der Meeresoberfläche liegt, zu schwenken, so daß dadurch die gesamte Windkraftanlage unter die Meeresoberfläche abgesenkt wird. Hierzu können beispielsweise Winden (auch hydraulisch betrieben) eingesetzt werden. Die Verschwenkung um einen Schwenkpunkt kann natürlich auch bei Querstrom-Windkraftanlagen Verwendung finden.

In Weiterbildung der Erfindung ist vorgesehen, daß zumindest die eine Windkraftanlage, insbesondere mehrere Windkraftanlagen, auf einer absenkbaren und anhebbaren Plattform angeordnet ist und die Plattform Mittel zum Absenken und Anheben aufweist. Damit kann bei gleichzeitiger Beibehaltung der Vermeidung von Beschädigungen ein Windpark geschaffen werden, mit dem schnell mehrere Windkraftanlage bewegt werden können. Ist nur eine Windkraftanlage vorhanden, bietet sich deren Montage auf einer Plattform ebenfalls an, da zunächst die Plattform mit den Mitteln zu deren Absenken und Auftauchen auf dem Meeresgrund installiert werden kann. Anschließend erfolgt das Aufsetzen der Windkraftanlage, die nicht speziell für den Betrieb Mittel zum Absenken und Auftauchen aufweisen muß. Damit können alle bisher schon bekannten und gebauten Windkraftanlagen, mit denen positive Erfahrungen insbesondere hinsichtlich ihrer Zuverlässigkeit und ihres wirtschaftlichen Betriebes gesammelt wurden, Verwendung finden.

Die schon beschriebenen Anordnungen mit ihren Vorteilen können alternativ auch am Land eingesetzt werden. Während es hier zwar nicht möglich ist, die Windkraftanlage unter die Meeresoberfläche abzusenken, kann jedoch die Absenkung in eine entsprechende Vertiefung, die tiefer liegt, als die umgebende Landschaftsoberfläche, stattfinden. Auch dadurch können an Land Beschädigungen durch zu große Windstärken (insbesondere bei Orkanen und dergleichen) vermieden werden. Gegebenenfalls kann eine Absenkung auch dann stattfinden, wenn temporär das Bild der Windkraftanlage nicht in die Landschaft paßt.

Wenn bisher die Rede davon war, daß die Windkraftanlagen im Meeresbereich aufgestellt und zumindest teilweise unter die Meeresoberfläche abgesenkt werden, gilt dies gleichermaßen auch für Binnenmeere und sonstige Gewässer wie Seen und auch Flüsse. Auch durch Verschwenken an Land um einen Schwenkpunkt können die Windkraftanlagen gegen böigen Wind und Orkan geschützt werden.

Bevorzugte Ausführungsbeispiele, auf die die Erfindung allerdings nicht beschränkt ist, sind im folgenden beschrieben und anhand der Figuren erläutert.

Es zeigen:
- Figur 1:: eine Windkraftanlage in Betriebsstellung und in abgesenkter Stellung,
- Figur 2:: eine Windkraftanlage in Betriebsstellung und in abgesenkter Stellung in einer Vertiefung,
- Figur 3:: eine teleskopierbare Windkraftanlage in Betriebsstellung und in abgesenkter Stellung,
- Figur 4:: eine teleskopierbare Windkraftanlage in Betriebsstellung und in abgesenkter Stellung mit mehreren Antriebselementen,
- Figur 5:: eine schwenkbare Windkraftanlage in Betriebsstellung und in abgesenkter Stellung,
- Figur 6:: mehrere Windkraftanlagen auf einer Plattform in Betriebsstellung und in abgesenkter Stellung.

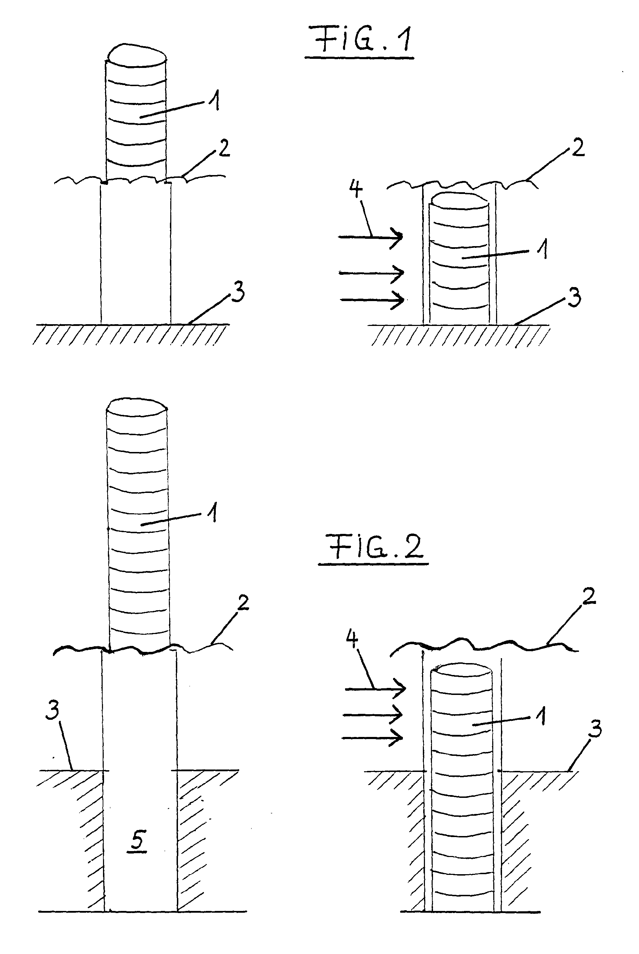

Figur 1 zeigt links eine Windkraftanlage 1 in Betriebsstellung und rechts in abgesenkter Stellung. Die Windkraftanlage 1 ist im Meeresbereich (Küste oder hoher See) oder im Bereich eines Binnengewässers (See, Fluß) aufgestellt. Mit der Bezugsziffer 2 ist die Meeresoberfläche (allgemein Wasseroberfläche) und mit der Bezugsziffer 3 der Meeresgrund (allgemein Grund) bezeichnet. Die Windkraftanlage 1 ist beliebiger Bauart und in Figur vereinfacht als Querstrom-Windkraftanlage gezeigt. Im rechten Teil der Figur 1 ist die Windkraftanlage 1 im abgesenkten Zustand gezeigt, wobei die Mittel zum Absenken und Auftauchen genauso wie die Mittel zur Erfassung der Witterungsverhältnisse (insbesondere Windstärke und Wellengang) und die Mittel zur Energieerzeugung und -übertragung zwecks Vereinfachung der Darstellung weggelassen wurden, im Betrieb aber zweifelsohne vorhanden und bekannt sind. Während die Windkraftanlage 1 in Figur 1 rechts komplett abgesenkt ist, kann auch eine teilweise Absenkung insbesondere bei noch nicht allzu kritischen Witterungsverhältnissen vorgenommen werden. In der absenkten Stellung der Windkraftanlage 1 ist es denkbar, daß Strömungen 4 zum Betrieb und damit zur Energieerzeugung ausgenutzt werden.

Figur 2 zeigt eine Windkraftanlage 1 links in ihrer Betriebsstellung und rechts in abgesenkter Stellung in einer Vertiefung 5. Die Vertiefung 5 wird auf dem Meeresgrund 3 in geeigneter Weise vorgenommen, so daß die Windkraftanlage 1 bei ungünstigen Witterungsverhältnissen entweder teilweise oder komplett in die Vertiefung 5 abgesenkt werden kann. Auch bei teilweiser Absenkung in die Vertiefung 5 können (müssen aber nicht) Strömungen 4 zum Betrieb der Windkraftanlage 1 ausgenützt werden.

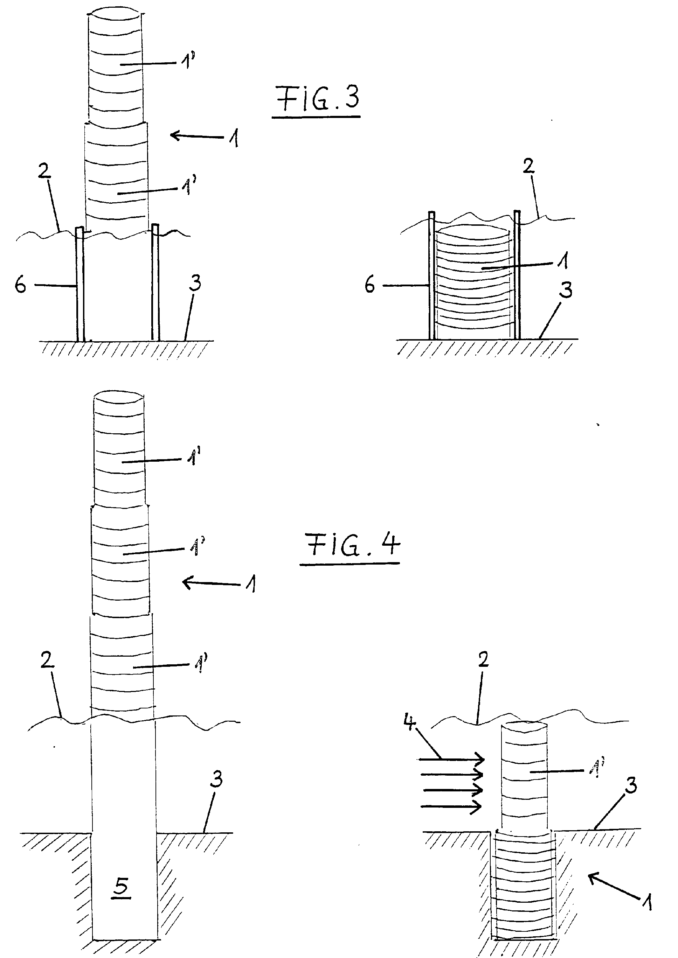

Figur 3 zeigt eine teleskopierbare Windkraftanlage 1, links in ihrer Betriebsstellung und rechts in abgesenkter Stellung. Dazu ist die Windkraftanlage 1 als Querstromanlage und teleskopierbar ausgebildet, wobei die Windkraftanlage 1 hier zwei ineinander verschiebbare Antriebselemente 1' aufweist. Dadurch kann die Windkraftanlage 1 schnell unter die Meeresoberfläche 2 linear abgesenkt werden. In dieser Figur 3 ist noch gezeigt, daß zum Schutz der Windkraftanlage 1 insbesondere unter der Meeresoberfläche 2 eine die Windkraftanlage 1 umgebende Schutzwand 6 vorhanden ist. Diese Schutzwand 6 kann auch bei den Windkraftanlagen der vorangegangen und folgenden Figuren vorhanden sein. Dann ist jedoch der Betrieb der Windkraftanlage infolge der Strömung 4 nicht mehr möglich, es sei denn, daß die Schutzwand 6 durchlässig gestaltet würde.

Figur 4 zeigt eine teleskopierbare Windkraftanlage 1, links wieder in Betriebsstellung und rechts in abgesenkter Stellung. Die Windkraftanlage 1 weist hier mehrere ineinander verschiebbare Antriebselemente 1' auf, wobei in abgesenkter Position das oberste Antriebselement 1' zur Ausnützung der Strömung 4 knapp unterhalb der Meeresoberfläche 2 verbleibt und die anderen Antriebselemente 1' in die Vertiefung 5 verbracht sind.

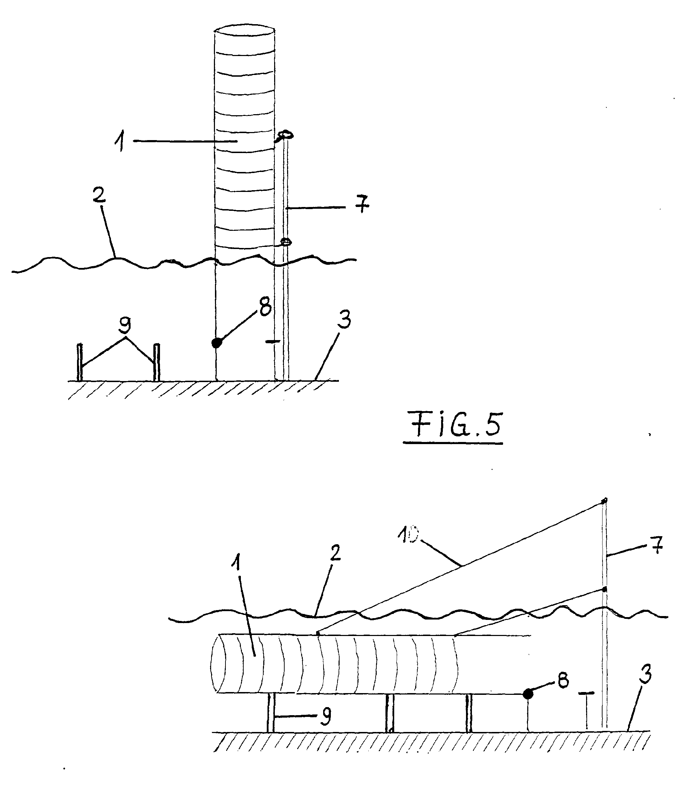

Figur 5 zeigt eine schwenkbare Windkraftanlage 1 in Betriebsstellung (oben) und in abgesenkter Stellung (unten). Auf dem Meeresgrund ist ein Stützpfeiler 7 verankert, der derart ausgestaltet ist, daß er alle Kräfte beim Verschwenken der Windkraftanlage 1 aufnimmt und die Wind- sowie Wellenkräfte aushält. Die Windkraftanlage 1 (insbesondere deren nicht weiter dargestelltes Gerüst) weist einen Schwenkpunkt 8 auf, um den die Windkraftanlage 1 verschwenkt werden kann. Auf dem Meeresgrund 3 sind Stützen 9 vorhanden (müssen aber nicht), die die Windkraftanlage 1 in ihrer abgesenkten Stellung aufnehmen. Zum Absenken sind Antriebsmittel vorhanden, die insbesondere als Winden ausgebildet sind. Über eine oder mehrere Schwenktrossen 10 ist das Gerüst mit diesen Antriebsmitteln verbunden, wobei die Schwenktrossen an Umlenkpunkten im Stützpfeiler 7 umgelenkt werden. Als Antriebsmittel kommen alternativ auch Hydraulikzylinder in dem Sinne in Frage, daß die Anlage dann so ausgebildet ist und so funktioniert, wie es zum Beispiel von der Laderampe eines Baustellenfahrzeuges bekannt ist.

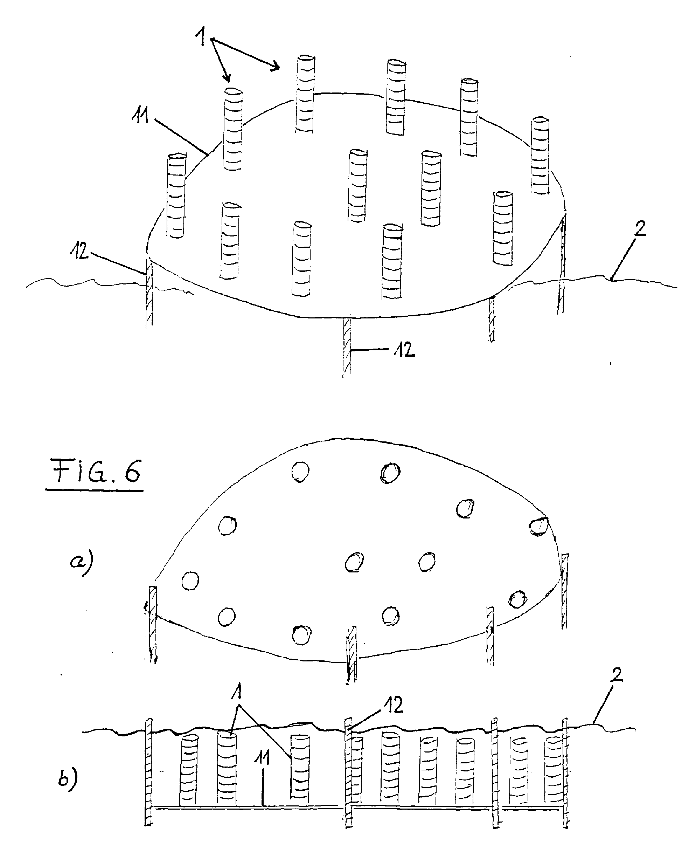

In Figur 6 sind mehrere Windkraftanlagen 1 auf einer Plattform 11 gezeigt. Figur 6a zeigt, daß nur die Windkraftanlagen abgesenkt werden, während in Figur 6b dargestellt ist, daß die gesamte Plattform 11 mit den darauf angeordneten Windkraftanlagen abgesenkt ist. Diese Plattform 11 ruht auf Trägern 12, die auf oder in dem Meeresgrund 3 verankert sind. Die Plattform 11 kann linear entlang der Träger 12 abgesenkt werden, wozu entsprechend ausgebildete Antriebsmittel (wie beispielsweise Hydraulikzylinder) vorhanden, aber nicht dargestellt sind. In Figur 6b (unten) ist dargestellt, daß die Plattform 11 abgesenkt ist, während die Träger 12 stehenbleiben. Alternativ dazu ist auch möglich, daß die Träger 12 mit abgesenkt werden, insbesondere dann, wenn es sich hierbei um die Hydraulikzylinder handelt.

Auch eine Absenkung der Windkraftanlagen ohne Absenkung der Plattform 11 (Figur 6a) oder eine nur teilweise Absenkung der Plattform 11 bei völliger Absenkung der Windkraftanlagen ist möglich. Ebenso kann die Absenkung von Windkraftanlagen von Pontons (schwimmende bzw. künstliche Inseln) oder Ölbohrplattformen aus geschehen,

### Bezugszeichenliste:

- 1: Windkraftanlage
- 1': Antriebselement
- 2: Meeresoberfläche
- 3: Meeresgrund
- 4: Strömung
- 5: Vertiefung
- 6: Schutzwand
- 7: Stützpfeiler
- 8: Schwenkpunkt
- 9: Stützen
- 10: Schwenktrossen
- 11: Plattform
- 12: Träger

## Patentansprüche

1. Windkraftanlage (1) mit zumindest einem Antriebselement, wobei zumindest ein Generator zur Erzeugung elektrischer Energie von dem Antriebselement antreibbar ist, **dadurch gekennzeichnet, daß** die Windkraftanlage (1) insbesondere im Meeresbereich aufgestellt ist und Mittel zur zumindest teilweisen Verbringung der Windkraftanlage (1) unter eine Wasseroberfläche, insbesondere unter die Meeresoberfläche (2), aufweist.

2. Windkraftanlage (1) nach Anspruch 1, **dadurch gekennzeichnet, daß** die Windkraftanlage (1) vollständig unter die Meeresoberfläche (2) verbringbar ist.

3. Windkraftanlage (1) nach Anspruch 1 oder 2, **dadurch gekennzeichnet, daß** die Windkraftanlage (1) zumindest teilweise in eine Vertiefung (5), die tiefer liegt als der Meeresgrund (3), verbringbar ist.

4. Windkraftanlage (1) nach einem der vorhergehenden Ansprüche, **dadurch gekennzeichnet, daß** die Windkraftanlage (1) um einen Schwenkpunkt (8) von einer senkrechten Betriebsstellung in eine in etwa waagerechte Ruhestellung unter der Meeresoberfläche (2) und umgekehrt verschwenkbar ist.

5. Windkraftanlage (1) nach Anspruch 4, **dadurch gekennzeichnet, daß** die Windkraftanlage (1) in ihrer Betriebsstellung an zumindest einem Stützpfeiler (7) gehalten ist.

6. Windkraftanlage (1) nach Anspruch 4 oder 5, **dadurch gekennzeichnet, daß** die Windkraftanlage (1) in ihrer Ruhestellung auf dem Meeresgrund oder auf zumindest einer Stütze (9) aufliegt.

7. Windkraftanlage (1) nach einem der vorhergehenden Ansprüche, **dadurch gekennzeichnet, daß** zumindest die eine Windkraftanlage (1), insbesondere mehrere Windkraftanlagen (1), auf einer absenkbaren und anhebbaren Plattform (11), einem Ponton, einer Ölbohrplattform oder dergleichen angeordnet ist und die Plattform (11) Mittel zum Absenken und Anheben aufweist.

8. Windkraftanlage (1) nach einem der vorhergehenden Ansprüche, **dadurch gekennzeichnet, daß** zumindest ein Teilelement (1') der Windkraftanlage (1) nach der Verbringung unter die Meeresoberfläche (2) weiter von einer Strömung (4) des Wassers betreibbar ist.

9. Windkraftanlage (1) mit zumindest einem Antriebselement, wobei zumindest ein Generator zur Erzeugung elektrischer Energie von dem Antriebselement antreibbar ist, **dadurch gekennzeichnet, daß** die Windkraftanlage (1) zumindest teilweise in eine Vertiefung (5), die tiefer liegt als die umgebende Landschaftsoberfläche, verbringbar ist.

10. Windkraftanlage (1) nach Anspruch 9, **dadurch gekennzeichnet, daß** die Windkraftanlage (1) um einen Schwenkpunkt (8) von einer senkrechten Betriebsstellung in eine in etwa waagerechte Ruhestellung oberhalb der umgebenden Landschaftsoberfläche und umgekehrt verschwenkbar ist.

11. Windkraftanlage (1) nach Anspruch 10, **dadurch gekennzeichnet, daß** die Windkraftanlage (1) in ihrer Betriebsstellung an zumindest einem Stützpfeiler (7) gehalten ist.

12. Windkraftanlage (1) nach Anspruch 4 oder 5, **dadurch gekennzeichnet, daß** die Windkraftanlage (1) in ihrer Ruhestellung auf der Erdoberfläche oder auf zumindest einer Stütze (9) aufliegt.
